# EUROPEAN PATENT APPLICATION

(11) **EP 2 362 304 A2**
(43) Date of publication of application: **31.08.2011**
(21) Application number: 11153472.3
(22) Date of filing: 07.02.2011
(51) Int. Cl.: G06F 3/12

(54) **Printer driver device, print job generating method, and print system**

(30) Priority: 19.02.2010 US 306018 P
(71) Applicant: Kabushiki Kaisha Toshiba, Tokyo 105-8001 (JP); Toshiba TEC Kabushiki Kaisha, Tokyo 141-8664 (JP)
(72) Inventor: Nagano, Shinya, Shinagawa-ku Tokyo 141-8664 (JP)
(74) Representative: Gendron, Vincent Christian

(57) **Abstract**

Generally, according to an embodiment, a printer driver device includes a print instruction accepting unit which accepts a print start instruction on a print setting screen on an application side, a first display unit, and a job generating unit. The first display unit displays, on a display device, a first display subject corresponding to a detailed registered print setting that is registered in advance, when the print instruction accepting unit accepts the print start instruction. The job generating unit generates a print job based on the registered print setting corresponding to the first display subject when the first display subject is selected by the user.

## Description

### CROSS-REFERENCE TO RELATED APPLICATION

This application is based upon and claims the benefit of priority from US provisional application 61/306, 018, filed on February 19, 2010; the entire contents of which are incorporated herein by reference.

### FIELD

Embodiments described herein relate generally to a print job generating technique using a registered print setting.

### BACKGROUND

Conventionally, when a user prints a document produced and browsed by an application, using detailed registered print settings that are registered in advance such as N in 1, double-side, booklet, staple, color or black-and-white and so on, the following steps are usually taken.
(1) First, a printer driver GUI (graphical user interface) of the image forming apparatus that is used is called from a print setting screen of the application.
(2) Next, on the printer driver GUI, a registered print setting (N in 1, double-side, booklet, staple, color or black-and-white) is selected from a dialog box called "favorite", "simple setting" and "template" or the like, and an OK button or the like on the printer driver GUI is clicked. Then, this registered print setting is set as the print setting and the printer driver GUI closes.
(3) Next, an OK button or the like on the print setting screen of the application is clicked.

Thus, the printer driver generates a print job based on the print setting (registered print setting) and transmits the print job to the image forming apparatus. Then, the image forming apparatus prints a document based on the print job.

However, the conventional printing method has a problem that the method includes many steps and therefore causes a burden on the user.

### DESCRIPTION OF THE DRAWINGS

FIG. 1 shows the configuration of a print system.
FIG. 2 is a functional block diagram of a PC.
FIG. 3 is a flowchart showing a print job generating method.
FIG. 4 shows a driver GUI.
FIG. 5 shows a setting name input screen.
FIG. 6 shows the correspondence between setting name, print setting and one-click button.
FIG. 7 shows a print setting screen of an application.
FIG. 8 shows a print setting screen of an application.
FIG. 9 shows a one-click print dialog.

### DETAILED DESCRIPTION

Generally, according to an embodiment, a printer driver device includes: a print instruction accepting unit which accepts a print start instruction on a print setting screen on an application side; a first display unit which displays, on a display device, a first display subject corresponding to a detailed registered print setting that is a print setting that can be set on a print setting screen of the printer driver called from the print setting screen of the application and cannot be set on the print setting screen on the application side and that is registered in advance, when the print instruction accepting unit accepts the print start instruction; a selection determination unit which determines that the first display subject displayed by the first display unit is selected by a user's input to an input device; and a job generating unit which generates a print job based on the registered print setting corresponding to the first display subject determined as being selected by the selection determination unit.

Generally, according to another embodiment, a print job generating method is a print job generating method by a printer driver device and includes: accepting a print start instruction on a print setting screen on an application side; displaying, on a display device, a first display subject corresponding to a detailed registered print setting that is a print setting that can be set on a print setting screen of the printer driver called from the print setting screen of the application and cannot be set on the print setting screen on the application side and that is registered in advance, when the print start instruction is accepted; determining that the first display subject that is displayed is selected by a user's input to an input device; and generating a print job based on the registered print setting corresponding to the first display subject determined as being selected by the user.

Generally, according to still another embodiment, a print system includes: a driver device including a print instruction accepting unit which accepts a print start instruction on a print setting screen on an application side, a first display unit which displays, on a display device, a first display subject corresponding to a detailed registered print setting that is a print setting that can be set on a print setting screen of the printer driver called from the print setting screen of the application and cannot be set on the print setting screen on the application side and that is registered in advance, when the print instruction accepting unit accepts the print start instruction, a selection determination unit which determines that the first display subject displayed by the first display unit is selected by a user's input to an input device, a job generating unit which generates a print job based on the registered print setting corresponding to the first display subject determined as being selected by the selection determination unit, and a job transmitting unit which transmits the print job; and an image forming apparatus which receives the print job and forms an image on a sheet based on the print job.

### First Embodiment

Hereinafter, an embodiment will be descried with reference to the drawings.

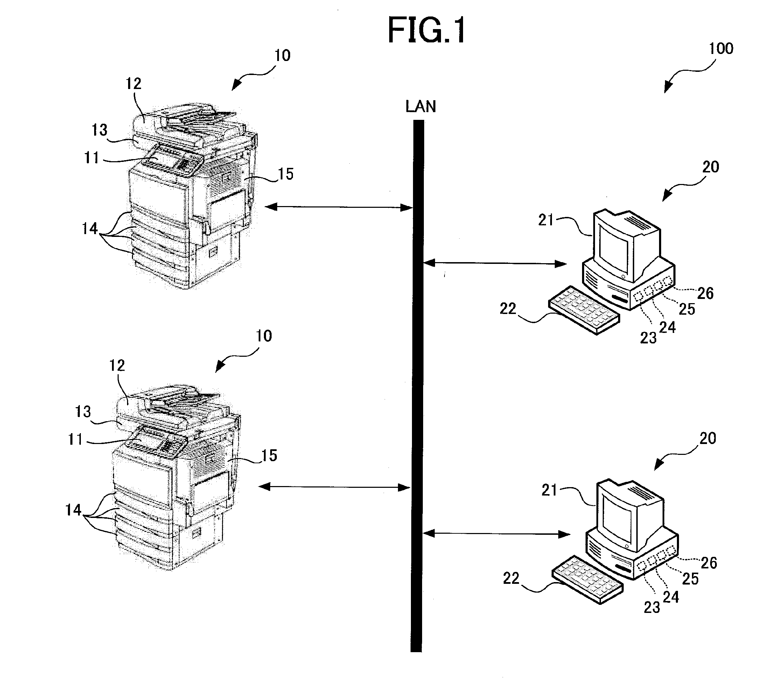

FIG. 1 shows the configuration of a print system 100.

The print system 100 has plural image forming apparatuses 10 and plural PCs 20 (driver devices).

The image forming apparatuses 10 and the PCs 20 are connected to each other via a telecommunications network such as LAN.

The image forming apparatus 10 is an MFP (multi-function peripheral) . The image forming apparatus 10 has a touch panel 11, an ADF 12 (automatic document feeder), an image reading unit 13, a paper supply cassette 14, and an image forming unit 15. The touch panel 11 functions both as a display device and as an input device. In the image forming apparatus 10, the image reading unit 13 reads a sheet set on the ADF 12 and generates image data, for example, in response to an operation input to the touch panel 11 by a user. In the image forming apparatus 10, a sheet in the paper supply cassette 14 is sent to the image forming unit 15 and the read image is formed on the sheet by the image forming unit 15 on the basis of the image data. The image forming apparatus 10 also forms an image on a sheet based on a print job transmitted from the PC 20.

The PC 20 has a display device 21, an input device 22, a processor 23, an ASIC 24 (application specific integrated circuit), a memory 25 (storage device), and an HDD 26 (hard disk drive). The display device 21 may be an LCD (liquid crystal display), EL (electronic luminescence) display, PDP (plasma display panel) and CRT (cathode ray tube) . The input device 22 may be a keyboard and mouse. The display device 21 and the input device 22 may be integrated on the touch panel.

The processor 23 executes programs stored in the memory 25 and realizes various functions. The processor 23 may be a CPU (central processing unit) or MPU (micro processing unit) . The memory 25 may be a RAM (random access memory), ROM (read only memory), DRAM (dynamic random access memory), SRAM (static random access memory), and VRAM (video RAM). The HDD 26 may be a flash memory.

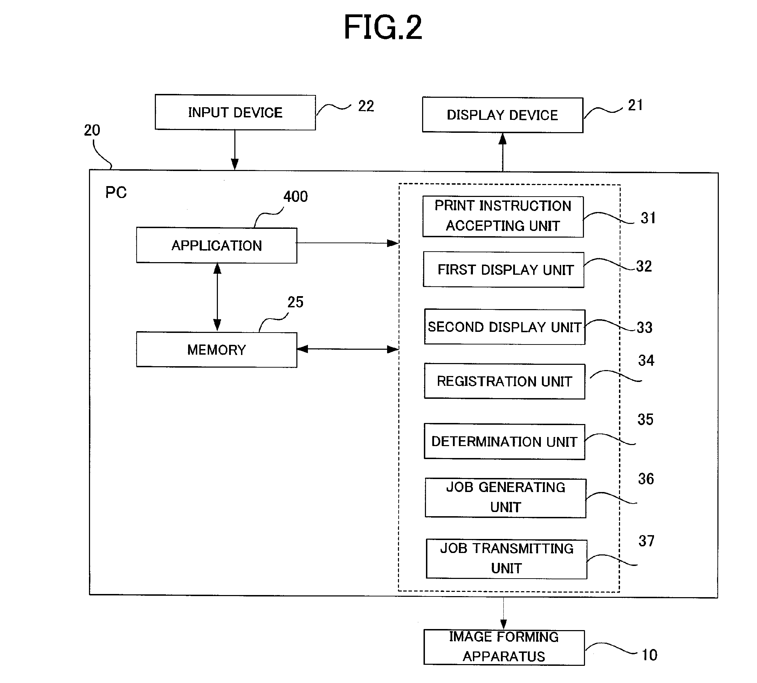

FIG. 2 is a functional block diagram of the PC 20.

The PC 20 realizes various functions as the processor 23 reads the OS (operating system), an application, and programs such as a printer driver or the like proper to the image forming apparatus 10, from the memory 25.

The PC 20 has an application 400 and a printer driver 300, as functional units realized by the processor 23 reading various programs as described above from the memory 25. The printer driver 300 has a print instruction accepting unit 31, a first display unit 32, a second display unit 33, a registration unit 34 (a first registration unit and a second registration unit), a determination unit 35 (a selection determination unit), a job generating unit 36, and a job transmitting unit 37.

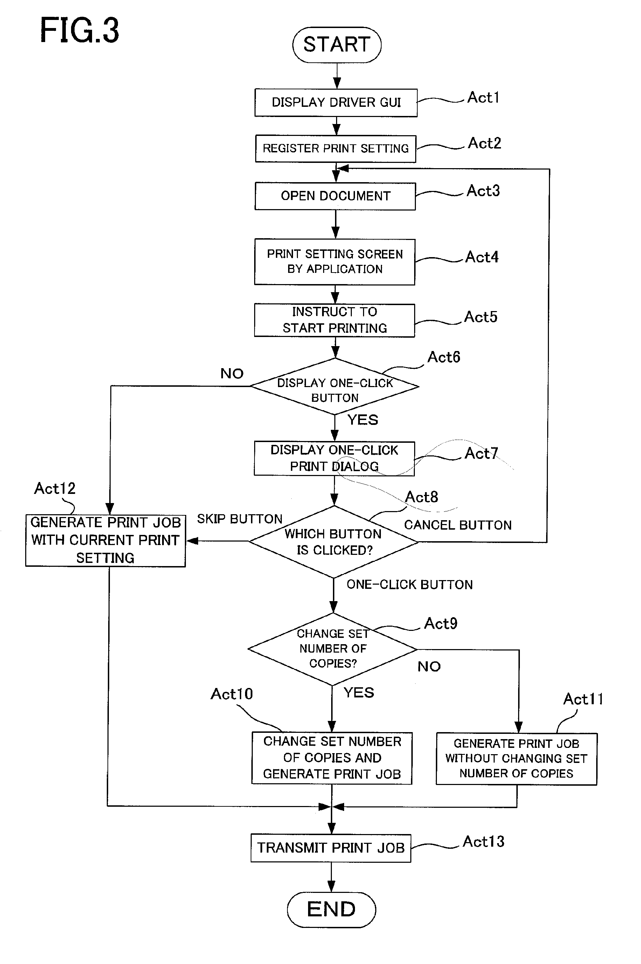

Hereinafter, a print job generating method by the PC 20 will be described with reference to the flowchart of FIG. 3.

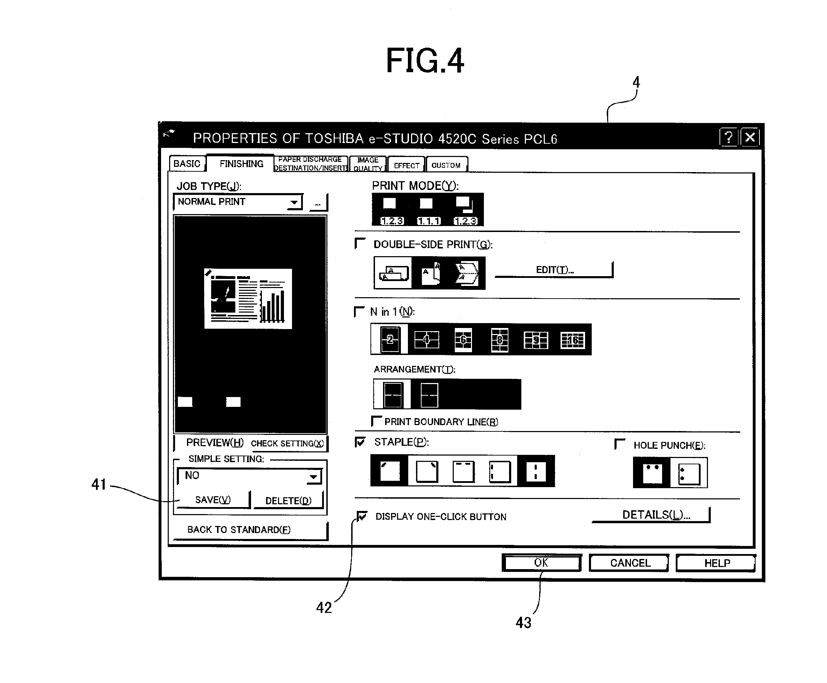

First, before printing, the user registers detailed print settings such as N in 1, double-side, booklet, staple, color or black-and-white and the like in advance as registered print settings in the memory 25. That is, first, in response to an input to the input device 22 by the user, the second display unit 33 displays a driver GUI 4 (a print setting screen of a printer driver) which is compatible with the image forming apparatus 10 used by the user and which accepts the detailed print settings (FIG. 4) (ACT 1).

After ACT 1, the registration unit 34 registers the detailed print settings accepted on the driver GUI 4 as registered print settings in the memory 25 in association with one-click buttons, and registers in the memory 25 whether to display the one-click buttons or not (ACT 2).

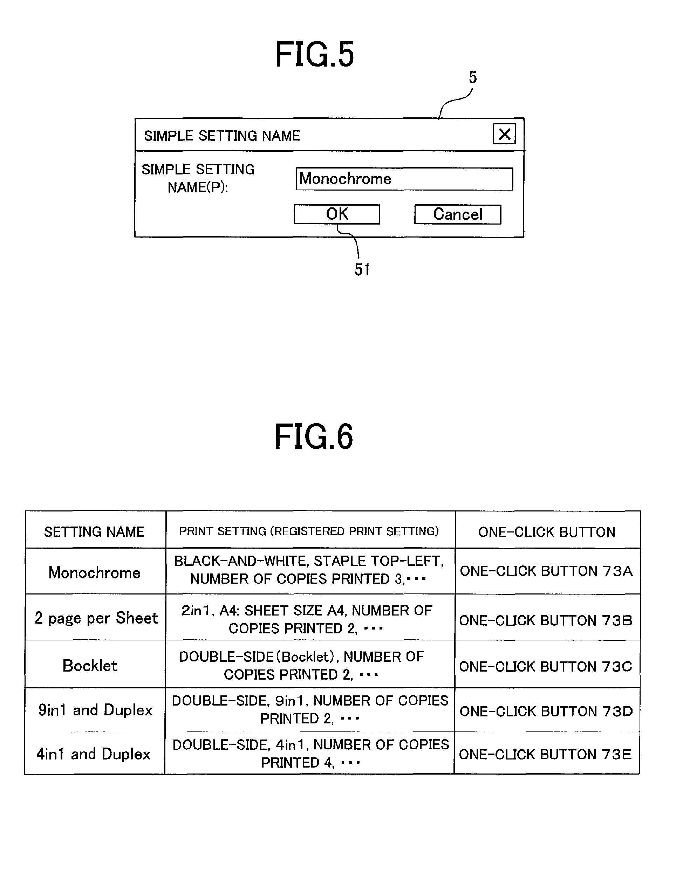

Specifically, after ACT 1, the user carries out detailed print settings including black-and-white, staple top left, the number of copied printed 3 and the like on the driver GUI 4, and then clicks a save button 41. Then, a setting name input screen 5 (FIG. 5) is displayed. Therefore, the user inputs setting names on the input screen and clicks an OK button 51. Then, the registration unit 34 registers the inputted setting names such as "Monochrome", the detailed print settings including black-and-white, staple top left, the number of copies printed 3 and the like accepted on the driver GUI 4, and one-click buttons 73A to 73E in association with each other in the memory 25, as shown in FIG. 6. In this case, as for settings that are not changed from initial settings on the driver GUI 4, the initial settings are registered. The detailed print setting registered in the memory 25 with the setting name attached thereto is hereinafter called a registered print setting. The registered print setting is a detailed print setting that can be set on the driver GUI 4 called from the print setting screen of the application 400 and that cannot be set on the print setting screen on the side of the application 400.

On the driver GUI 4, there is a check box 42 for setting whether to display the one-click buttons 73A to 73E or not (FIG. 4). After registering the detailed print settings with the setting names attached thereto in the memory 25 as registered print settings as described above, the user enters a check mark in the check box 42 and clicks an OK button 43 on the driver GUI 4, or clicks the OK button 43 without entering a check mark in the check box 42. Then, when a check mark is entered in the check box 42, the registration unit 34 registers in the memory 25 that the one-click buttons 73A to 73E should be displayed. When a check mark is not entered in the check box 42, the registration unit 34 registers in the memory 25 that the one-click buttons 73A to 73E should not be displayed.

In this manner, in response to the user's input to the input device 22, the PC 20 registers the detailed print settings which the user wants to use as registered print settings in the memory 25. Hereinafter, the processing operation of the PC 20 when actually printing with the registered print settings will be described.

After ACT 2, in response to an input to the input device 22 by the user, the application 400 opens a document (ACT 3) .

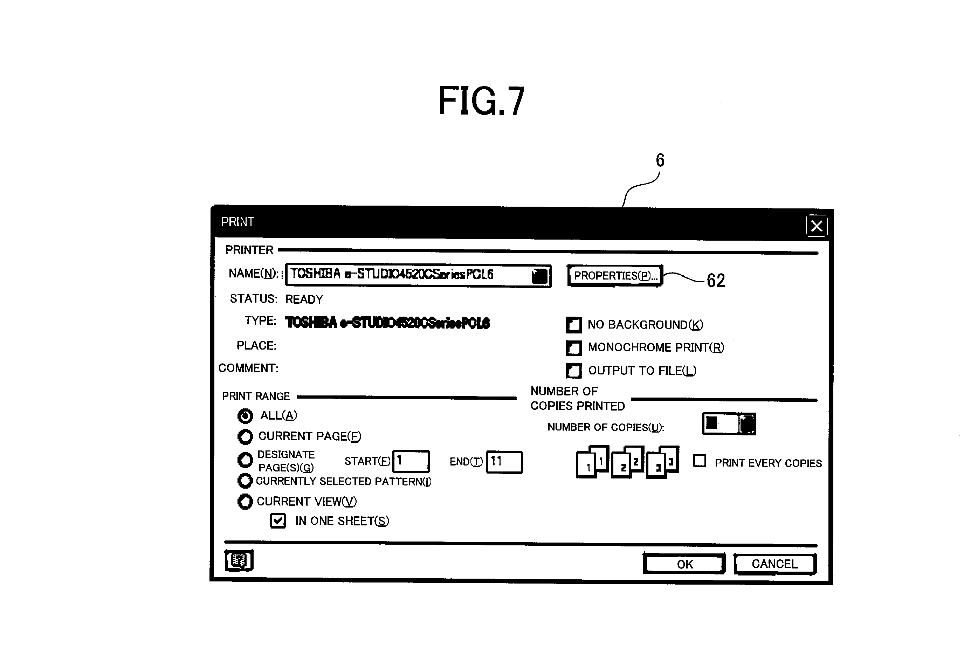

After ACT 3, in response to an input to the input device 22 by the user, the application 400 displays a print setting screen 6 (FIG. 7) (ACT 4).

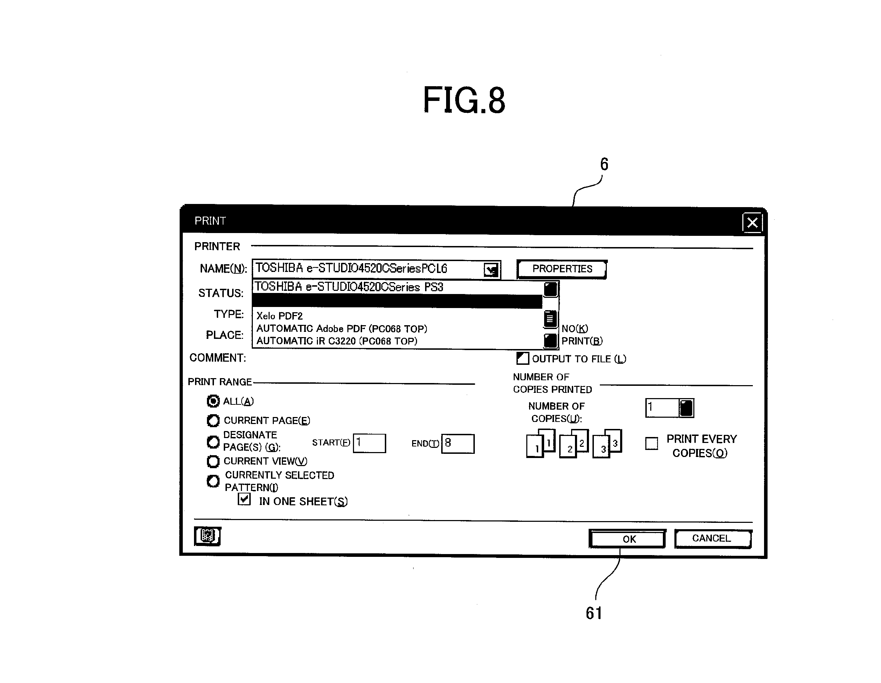

After ACT 4, the user selects the image forming apparatus 10 to be used, on the print setting screen 6 (FIG. 8), and clicks an OK button 61. Then, the application 400 generates application data (print data of the document) and a print start instruction (command data to request the start of printing) . Then, the print instruction accepting unit 31 accepts the print start instruction on the print setting screen 6 on the side of the application 400 and the application data selected by the application 400 (ACT 5).

After ACT 5, the determination unit 35 determines whether to display the one-click buttons 73A to 73E or not, with reference to the memory 25 (ACT 6).

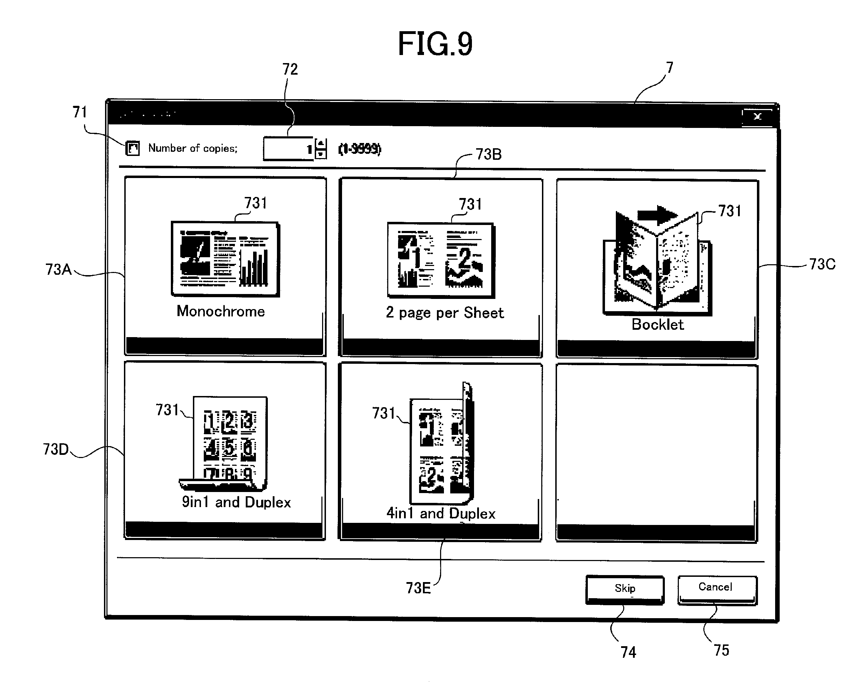

When it is registered in the memory 25 that the one-click buttons 73A to 73E should be displayed, the determination unit 35 determines that the one-click buttons 73A to 73E should be displayed (ACT 6, YES) . In this case, the first display unit 32 displays a one-click print dialog 7 on the display device 21 with reference to the memory 25 (ACT 7) (FIG. 9). The one-click print dialog 7 includes a check box 71 for the setting of the number of copies, a number of copies setting section 72, the one-click buttons 73A to 73E (first display subject), a skip button 74 (second display subject), and a cancel button 75. The first display unit 32 displays the one-click buttons 73A to 73E including the setting names (Monochrome, 2 pages per sheet, etc.) corresponding to the respective one-click buttons 73A to 73E and patterns 731 showing the registered print settings corresponding to the respective one-click buttons 73A to 73E, with reference to the memory 25.

After ACT 6, the user clicks one of the one-click buttons 73A to 73E and thus selects the one of the one-click buttons 73A to 73E. When the user wants to print the number of copies that is different from the set number of copies included in the registered print settings corresponding to the one-click buttons 73A to 73E, the user inputs the number of copies in the number of copies setting section 72 before selecting one of the one-click buttons 73A to 73E, and then enters a check mark in the check box 71 for the setting of the number of copies. Subsequently, the user clicks one of the one-click buttons 73A to 73E and thus selects the one of the one-click buttons 73A to 73E.

As the user thus selects the button, the determination unit 35 determines which button is selected by the user (ACT 8). When it is determined that one of the one-click buttons 73A to 73E is selected (ACT 8, One-click button), the determination unit 35 determines whether a check mark is entered in the check box 71 or not (ACT 9).

When the determination unit 35 determines that a check mark is entered in the check box 71 (ACT 9, YES), the job generating unit 36 acquires and holds the registered print setting corresponding to the selected one of the one-click buttons 73A to 73E from the memory 25, and changes the set number of copies included in the registered print setting that is held, to the set number of copies inputted in the number of copies setting section 72. Then, the job generating unit 36 generates a print job based on the registered print setting that is held and the application data generated by the application 400 (ACT 10). The print job is command data that can be interpreted by the image forming apparatus 10 and is described in PDL (page description language) or PJL (printer job language).

When the determination unit 35 determines that a check mark is not entered in the check box 71 (ACT 9, NO), the job generating unit 36 acquires the registered print setting corresponding to the selected one of the one-click buttons 73A to 73E from the memory 25, and generates a print job based on the registered print setting that is acquired and the application data generated by the application 400 (ACT 11).

After ACT 10 and ACT 11, the job transmitting unit 37 transmits the print job to the image forming apparatus 10 (ACT 13) . The image forming apparatus 10 forms an image on a sheet based on the print job.

When the user wants to print without displaying the one-click print dialog 7, the user clicks the OK button 43 without entering a check mark in the check box 42 for setting whether to display the one-click buttons 73A to 73E or not, on the driver GUI 4 displayed in ACT 1 (FIG. 4) . Then, the registration unit 34 registers in the memory 25 that the one-click buttons 73A to 73E should not be displayed (ACT 2) .

Then, after clicking a property button 62 on the print setting screen 6 of the application 400 (ACT 4) to call the driver GUI 4 and then carrying out suitable print setting, the user clicks the OK button 43 on the driver GUI 4. Thus, the registration unit 34 registers the print setting in the memory 25 and the second display unit 33 closes the driver GUI 4. The setting to display the one-click buttons 73A to 73E is given here. However, when the user does not want the one-click print dialog 7 to be displayed, the user can remove the check mark from the check box 42 for setting whether to display the one-click buttons 73A to 73E or not, on the driver GUI 4 that is called. Thus, as the user clicks the OK button 43 on the driver GUI 4, the registration unit 34 registers in the memory 25 that the one-click buttons 73A to 73E should not be displayed. In this manner, the print setting is registered in the memory 25 and the driver GUI 4 closes.

Then, the user clicks the OK button 61 on the print setting screen 6 of the application 400. Then, as the application 400 generates a print start instruction (ACT 5), the determination unit 35 determines that the one-click buttons 73A to 73E should not be displayed with reference to the memory 25 (ACT 6, NO) . The job generating unit 36 generates a print job with the current print setting that is registered in the memory 25 (ACT 12) .

When the determination unit 35 determines that the skip button 74 is pressed by the user in the one-click print dialog 7 (ACT 8, Skip button), the job generating unit 36 generates a print job with the current print setting that is registered in the memory 25 (ACT 12).

When the determination unit 35 determines that the cancel button 75 is pressed by the user in the one-click print dialog 7 (ACT 8, Cancel button), the first display unit 32 closes the one-click print dialog 7 and the operation returns to ACT 4.

Now, conventionally, when printing with the registered print setting, the user needs to carry out the three procedures of (1) calling the driver GUI on the print setting screen of the application, (2) calling the registered print setting on the driver GUI that is called, and (3) clicking the OK button on the print setting screen of the application.

Meanwhile, in this embodiment, the user can print with the registered print settings corresponding to the one-click buttons 73A to 73E by carrying two procedures of (1) clicking the OK button 43 on the print setting screen 6 of the application 400, and (2) clicking one of the one-click buttons 73A to 73E in the one-click print dialog 7 appearing in response to the click on the OK button 43. That is, in this embodiment, printing can be carried out using the registered print setting by a shorter procedure than in the conventional technique. In this embodiment, since the processing is shifted early from the side of the application 400 to the side of the printer driver 300, detailed print setting can be made by a short procedure. In this manner, in this embodiment, printing can be carried out using the registered print setting by the short procedure and the operation burden on the user can be reduced.

In the embodiment, the plural one-click buttons 73A to 73E are displayed in the single screen of the one-click print dialog 7, and the setting names and the patterns 731 showing the contents of the registered print setting are displayed on the one-click buttons 73A to 73E. Therefore, a setting that is fit for purpose can be selected easily.

In the embodiment, the check box 71 for the setting of the number of copies and the number of copies setting section 72 are provided in the one-click print dialog 7. Therefore, even when the set number of copies remains unchanged from the initial setting of 1 in the registered print setting corresponding to the selected one of the one-click buttons 73A to 73E, the number of copies can be set using the check box 71 and the setting section 72, which is very convenient.

In the embodiment, when the user does not want to print using the one-click buttons 73A to 73E, the user can click the skip button 74 in the one-click print dialog 7 and thus print with the current setting, which is very convenient.

As described above, in the embodiment, minimum necessary change can be made and different arbitrary registered print setting can be used easily for different purposes by minimum procedures.

### Modifications

The print job generation described in the embodiment may be carried out by the image forming apparatus 10 instead of the PC 20.

Using the simple setting on the driver GUI 4, the detailed print settings need not be associated with the one-click buttons 73A to 73E. For example, a dedicated button for associating the detailed print settings with the one-click buttons 73A to 73E may be provided on the driver GUI 4 and the dedicated button may be clicked so that a screen appears that enables input of setting names. Then, it can also be made possible to register the detailed print setting, setting names and the one-click buttons 73A to 73E in association with each other in the memory 25 by inputting the setting names on this screen and then clicking an OK button or the like on the screen.

Any form of recording medium that can store a program and can be read by a computer may be used. Specifically, the recording medium may be, for example, an internal storage device that is internally installed in a computer such as ROM or RAM, a portable storage medium such as CD-ROM, flexible disk, DVD disk, magneto-optical disk or IC card, a database holding a computer program, or another computer and its database or the like. The functions acquired by installing or downloading may be realized in cooperation with the OS or the like within the apparatus. A part or the entirety of the program may include execution modules that are dynamically generated.

The order of each processing in the embodiment may be different from the exemplary order described in the embodiment.

As described above in detail, according to the technique described in this specification, a print job generating technique using registered print settings can be provided.

While certain embodiments have been described, these embodiments have been presented by way of example only, and are not intended to limit the scope of invention. Indeed, the novel apparatus, methods and system described herein may be embodied in a variety of other forms; furthermore, various omissions, substitutions and changes in the form of the apparatus, methods and system described herein may be made without departing from the sprit of the inventions. The accompanying claims and their equivalents are intended to cover such forms or modifications as would fall within the scope and spirit of the inventions.

## Claims

1. A printer driver device comprising:
a print instruction accepting unit which accepts a print start instruction on a print setting screen on an application side;
a first display unit which displays, on a display device, a first display subject corresponding to a detailed registered print setting that is a print setting that can be set on a print setting screen of the printer driver called from the print setting screen of the application and cannot be set on the print setting screen on the application side and that is registered in advance, when the print instruction accepting unit accepts the print start instruction;
a selection determination unit which determines that the first display subject displayed by the first display unit is selected by a user's input to an input device; and
a job generating unit which generates a print job based on the registered print setting corresponding to the first display subject determined as being selected by the selection determination unit.

2. The device according to claim 1, further comprising:
a second display unit which displays the print setting screen of the printer driver on the display device before the print instruction accepting unit accepts the print start instruction on the print setting screen on the application side; and
a first registration unit which registers the detailed print setting accepted on the print setting screen of the printer driver in association with the first display subject, as the registered print setting.

3. The device according to claim 1, further comprising a second registration unit which registers whether to display the first display subject or not,
wherein when the second registration unit registers that the first display subject should be displayed, the first display unit displays the first display subject on the display device, and when the second registration unit registers that the first display subject should not be displayed, the first display unit does not display the first display subject on the display device, and
when the print instruction accepting unit accepts the print start instruction, the job generating unit generates the print job based on the print setting of the time when the print instruction accepting unit accepts the print start instruction.

4. The device according to claim 1, wherein the first display unit displays a number of copies setting section together with the first display subject, and
when the selection determination unit determines that the first display subject is selected by the user's input to the input device, the job generating unit acquires the registered print setting corresponding to the selected first display subject from a storage device, then changes a set number of copies of the registered print setting that is acquired, to a number of copies accepted in the setting section, and then generates the print job based on the registered print setting with the changed set number of copies.

5. The device according to claim 1, wherein the first display unit displays the first display subject including a pattern showing the registered print setting corresponding to the first display subject, on the display device.

6. The device according to claim 1, wherein the first display unit displays a plurality of the first display subjects corresponding to different registered print settings, in the form of a list on the display device.

7. The device according to claim 1, wherein the first display unit displays a second display subject together with the first display subject on the display device, and
when the selection determination unit determines that the second display subject is selected by the user's input to the input device, the job generating unit generates the print job based on the print setting of the time when the print instruction accepting unit accepts the print start instruction.

8. A print job generating method by a printer driver device comprising:
accepting a print start instruction on a print setting screen on an application side;
displaying, on a display device, a first display subject corresponding to a detailed registered print setting that is a print setting that can be set on a print setting screen of the printer driver called from the print setting screen of the application and cannot be set on the print setting screen on the application side and that is registered in advance, when the print start instruction is accepted;
determining that the first display subject that is displayed is selected by a user's input to an input device; and
generating a print job based on the registered print setting corresponding to the first display subject determined as being selected by the user.

9. The method according to claim 8, wherein the print setting screen of the printer driver is displayed on the display device before the print start instruction on the print setting screen on the application side is accepted; and
the detailed print setting accepted on the print setting screen of the printer driver is registered in association with the first display subject, as the registered print setting.

10. The method according to claim 8, wherein whether to display the first display subject or not is registered, and
when it is registered that the first display subject should be displayed, the first display subject is displayed on the display device, and when it is registered that the first display subject should not be displayed, the first display subject is not displayed on the display device, and when the print start instruction is accepted, the print job is generated based on the print setting of the time when the print start instruction is accepted.

11. The method according to claim 8, wherein a number of copies setting section is displayed together with the first display subject, and
when it is determined that the first display subject is selected by the user's input to the input device, the registered print setting corresponding to the selected first display subject is acquired from a storage device, then a set number of copies of the registered print setting that is acquired is changed to a number of copies accepted in the setting section, and then the print job is generated based on the registered print setting with the changed set number of copies.

12. The method according to claim 8, wherein the first display subject including a pattern showing the registered print setting corresponding to the first display subject is displayed on the display device.

13. The method according to claim 8, wherein a plurality of the first display subjects corresponding to different registered print settings is displayed in the form of a list on the display device.

14. The method according to claim 8, wherein a second display subject is displayed together with the first display subject on the display device, and
when it is determined that the second display subject is selected by the user's input to the input device, the print job is generated based on the print setting of the time when the print start instruction is accepted.

15. A print system comprising:
a driver device including a print instruction accepting unit which accepts a print start instruction on a print setting screen on an application side, a first display unit which displays, on a display device, a first display subject corresponding to a detailed registered print setting that is a print setting that can be set on a print setting screen of the printer driver called from the print setting screen of the application and cannot be set on the print setting screen on the application side and that is registered in advance, when the print instruction accepting unit accepts the print start instruction, a selection determination unit which determines that the first display subject displayed by the first display unit is selected by a user's input to an input device, a job generating unit which generates a print job based on the registered print setting corresponding to the first display subject determined as being selected, by the selection determination unit, and a job transmitting unit which transmits the print job; and
an image forming apparatus which receives the print job and forms an image on a sheet based on the print job.

16. The system according to claim 15, wherein the driver device further comprises:
a second display unit which displays the print setting screen of the printer driver on the display device before the print instruction accepting unit accepts the print start instruction on the print setting screen on the application side; and
a first registration unit which registers the detailed print setting accepted on the print setting screen of the printer driver in association with the first display subject, as the registered print setting.

17. The system according to claim 15, wherein the driver device further comprises a second registration unit which registers whether to display the first display subject or not, and
when the second registration unit registers that the first display subject should be displayed, the first display unit displays the first display subject on the display device, and when the second registration unit registers that the first display subject should not be displayed, the first display unit does not display the first display subject on the display device, and when the application generates the print start instruction, the job generating unit generates the print job based on the print setting of the time when the print start instruction is generated.

18. The system according to claim 15, wherein the first display unit displays a number of copies setting section together with the first display subject, and
when the selection determination unit determines that the first display subject is selected by the user's input to the input device, the job generating unit acquires the registered print setting corresponding to the selected first display subject from a storage device, then changes a set number of copies of the registered print setting that is acquired, to a number of copies accepted in the setting section, and then generates the print job based on the registered print setting with the changed set number of copies.

19. The system according to claim 15, wherein the first display unit displays the first display subject including a pattern showing the registered print setting corresponding to the first display subject, on the display device.

20. The system according to claim 15, wherein the first display unit displays a plurality of the first display subjects corresponding to different registered print settings, in the form of a list on the display device.
